# EUROPÄISCHE PATENTSCHRIFT

(11) **EP 0 623 929 B1**
(45) Veröffentlichungstag und Bekanntmachung des Hinweises auf die Patenterteilung: **07.02.2001**
(21) Anmeldenummer: 94106842.1
(22) Anmeldetag: 02.05.1994
(51) Int. Cl.: G11B 27/36, G11B 20/18, G11B 5/455, G11B 15/02

(54) **Verfahren und Vorrichtung zur Überwachung von aufgezeichneten Daten**
Method and device for monitoring recorded data
Méthode et dispositif de contrôle de données enregistrées

(30) Priorität: 03.05.1993 DE 4314491
(43) Veröffentlichungstag der Anmeldung: 09.11.1994
(73) Patentinhaber: Ahrens, Thomas, 38104 Braunschweig (DE)
(72) Erfinder: Ahrens, Thomas, 38104 Braunschweig (DE)

(56) Entgegenhaltungen:
- EP-A- 0 519 670
- DE-A- 3 942 571
- JP-A- 63 255 828
- US-A- 3 579 211
- US-A- 4 360 842
- PATENT ABSTRACTS OF JAPAN vol. 10, no. 642 (P-466) (2218) 10. Juni 1986 & JP-A-61 016 033 (MATSUSHITA DENKI SANGYO K.K.) 24. Januar 1986
- PATENT ABSTRACTS OF JAPAN vol. 14, no. 189 (P-1037) 17. April 1990 & JP-A-02 033 706 (HITACHI LTD.) 2. Februar 1990
- PATENT ABSTRACTS OF JAPAN vol. 16, no. 481 (P-1431) 6. Oktober 1992 & JP-A-04 170 771 (NEC GUMMA LTD.) 18. Juni 1992
- IBM TECHNICAL DISCLOSURE BULLETIN., Bd.34, Nr.8, Januar 1992, ARMONK,NEW YORK US Seiten 265 - 266, XP000302114 'MEDIA STATISTICS FOR TAPE'
- DATABASE WPI Week 7820, Derwent Publications Ltd., London, GB; AN 78-D8311A & DE-A-26 50 891 (BASF AG) 11. Mai 1978
- DATABASE WPI Section EI, Week 8745, Derwent Publications Ltd., London, GB; Class T03, AN 87-315730 & GB-A-2 190 233 (SONY CORP.) 11. November 1987

## Beschreibung

Die vorliegende Erfindung betrifft ein Verfahren und eine Vorrichtung zur Aufzeichnung von Daten auf einen wiederbespielbaren Datenträger.

Es ist allgemein bekannt, Daten auf einem wiederbespielbaren Datenträger abzuspeichern und von diesem auszulesen. Solch ein wiederbespielbarer Datenträger kann beispielsweise ein Magnetband, eine optisch bespielbare Scheibe, wie z.B. eine magneto optische Disc (MOD), eine Mini-Disc (MD) oder dergleichen sein. Die entsprechenden Daten, die Audioinformationen, Videoinformationen und/oder Daten zur elektronischen Datenverarbeitung enthalten können, können in digitaler oder analoger Weise dem Datenträger eingeprägt sein.

In den Fällen, bei denen der Datenträger als Band, wie z.B. als Magnetband, ausgebildet ist, werden die Daten in Spuren aufgezeichnet, deren Lage durch die Position eines Schreibkopfes vorgegeben ist. Die Daten werden von einem Lesekopf ausgelesen, der mechanisch starr mit dem Schreibkopf verbunden sein kann.

Es hat sich herausgestellt, daß Datenträger, die vor längerer Zeit von einer Datenaufzeichnungsanlage, wie einem Audio-, Video- oder Datenrecorder, bespielt wurden, einen Informationsverlust aufweisen. Dieser ist teilweise durch physikalische Effekte unter dem Einfluß einer Erwärmung, beispielsweise bei transportablem Betrieb oder im Inneren eines Kraftfahrzeuges bedingt oder durch eine relative Verschiebung des Lesekopfes im Vergleich zu der Lage der aufgezeichneten Spuren.

Ein Verfahren nach dem Oberbegriff der Anspruchs 1 ist aus DE-A-2650891 und JP-A-6 3255 828 bekannt. GB-A-2190233 beschreibt einen Auffrischungsmodus, wenn eine Fehlerrate überschritten wird, wobei eine neue Bandkassette bespielt wird.

EP-A- 0 519 670 zeigt ein redundantes Festplattensystem, wobei eine als defekt erkannte Aufzeichnung auf einer Festplatte mit Hilfe den anderen Festplattensignale ersetzt wird.

Es ist die Aufgabe der vorliegenden Erfindung einen möglichen Datenverlust, der durch physikalische Effekte in einem Speichermedium, mechanische Toleranzen oder dergleichen auftreten kann, zu erkennen und die defekte Aufzeichnung zu ersetzen.

Diese Aufgabe wird gelöst durch ein Verfahren gemäß dem Anspruch 1 und durch eine Vorrichtung gemäß dem Vorrichtungsanspruch 6.

Es wird ein Datenaufzeichnungsgerät mit einem Mittel zum Schreiben von Daten der genannten Art, im folgenden auch kurz Schreibkopf genannt, auf einen entsprechenden Datenträger und einem entsprechenden Mittel zum Lesen dieser Daten, auch Lesekopf genannt, wie im folgenden beschrieben, weiterentwickelt.

Der Pegel der von dem Lesekopf ausgelesenen Daten wird mit einem Sollwert verglichen. Dieser kann ein Maß für einen minimalen Mittelwert-Pegel der ausgelesenen Daten, einen minimalen Maximalpegel und/oder dergleichen sein. Unterschreitet der entsprechende Pegel der ausgelesenen Daten den genannten Sollwert, so wird von einem drohenden Datenverlust ausgegangen und ein entsprechendes Warnsignal erzeugt.

Das Warnsignal dient dazu, einen sogenannten Auffrisch-Modus einzuleiten. In diesem Modus wird ein Signal, das die zu verarbeitenden Daten enthält, von dem Datenträger durch den Lesekopf ausgelesen und durch den Schreibkopf neu auf den Datenträger geschrieben. Die ausgelesenen bzw. die aufzuschreibenden Signale werden dabei derartig verstärkt, daß bei einem späteren Auslesen der "aufgefrischten" Signale mit einem Pegel oberhalb des geforderten Sollpegels zu rechnen ist. Ein Abgleich des entsprechenden Verstärkungsfaktors kann durch einen Testlauf, der vorgegebene Teile des Datenträgers umfaßt, eingestellt werden.

Ist der Schreib- oder Lesekopf oder sind beide Köpfe aus ungewollten Gründen dejustiert, so ist es möglich, daß sie unterschiedliche Spuren beschreiben bzw. lesen. Dadurch kann es zu einer Fehlfunktion des oben beschriebenen Verfahrens kommen. Eine solche Fehljustierung der Köpfe untereinander kann durch einen Test-Modus festgestellt werden. In diesem Testmodus wird von dem Schreibkopf ein vorgegebenes Signal, vorzugsweise mit bekanntem Pegel, geschrieben und von dem Lesekopf ausgelesen. Ergibt sich dabei eine Abweichung zwischen dem aufgeschriebenen und dem ausgelesenen Pegel, so wird ein entsprechendes Fehlersignal erzeugt. Dieses kann dazu dienen, diese Abweichung einem Benutzer optisch und/oder akustisch oder auf sonstige Weise anzuzeigen. Weiterhin kann das Fehlersignal auch für eine automatische Lagekorrektur von zumindest einem der beiden Köpfe benutzt werden.

Bei einem Bandaufzeichnungsgerät erfolgt der Auffrischungsbetrieb vorteilhafterweise vom Ende des Bandes hin zu seinem Anfang. Dieses bietet sich insbesondere bei Geräten mit einer sogenannten Hinterbandkontrolle an, bei der, in Bandlaufrichtung gesehen, der Lesekopf hinter dem Schreibkopf angeordnet ist und mit einer nur geringen Verzögerung im Normalbetrieb die geschriebenen Daten zur Kontrolle ausliest. Da für den Auffrischung-Modus zunächst ein Auslesen von Daten und anschließend ein entsprechendes Aufschreiben dieser Daten erforderlich ist, sollte das Datenband, bezogen auf die Schreib/Leseköpfe, in umgekehrter Richtung im Vergleich zum Normalbetrieb laufen. Dabei sind bei beiden Betriebsarten dieselben Datenspuren zu betrachten, also jeweils diejenigen für die eine oder diejenigen für die andere Bandlaufrichtung.

Um eine Änderung der Bandlaufrichtung zu umgehen, was auch hinsichtlich des technischen sowie finanziellen Aufwands gerechtfertigt erscheint, bietet sich die Verwendung zusätzlicher Schreib- und Leseköpfe an, die örtlich den entsprechenden Lese- und Schreibköpfen zugeordnet sein können, d.h. jedem Lesekopf ist ein Schreibkopf, jedem Schreibkopf ein Lesekopf zugeordnet. Bei Verwendung zweier kombinierter Schreib/Leseköpfe, d.h. zweimal ein kombinierter Schreib-/Lesekopf, reduziert sich der Aufwand noch weiter. Die Köpfe können dann durch geeignete Umschaltmittel elektronisch oder mechanisch vertauscht werden. Der Schreibkopf kann als Lese- und der zur Hinterbandkontrolle eingesetzte Lesekopf als Schreibkopf verwendet werden. Eine Bewegungsrichtungsänderung des Bandes oder eine physische Vertauschung der Köpfe entfällt somit.

Obwohl eine für eine Aufzeichnung vorgesehene Vormagnetisierung auch ein Löschen bewirken kann, ist bei einer Ausgestaltung zwischen den beiden Schreib-/Leseköpfen wenigstens ein Löschkopf für wenigstens eine zu löschende Spur oder ein sogenannter Vollöschkopf angebracht, der das Magnetband vor der Aufzeichnung der aufgefrischten Daten in wenigstens einer Spur bzw. in seiner gesamten Breite löscht. Der Löschvorgang ist gerade bei analog aufgezeichneten Daten wichtig, da möglicherweise die aufgefrischten Daten durch eine nicht zu vernachlässigende Remanenz der "alten" Daten in ihrer Qualität stark beeinträchtigt sein können.

Weitere Merkmale, Einzelheiten und Vorteile der Erfindung werden in den folgenden Ausführungsbeispielen mit Hilfe der Figuren beschrieben. Dabei zeigt

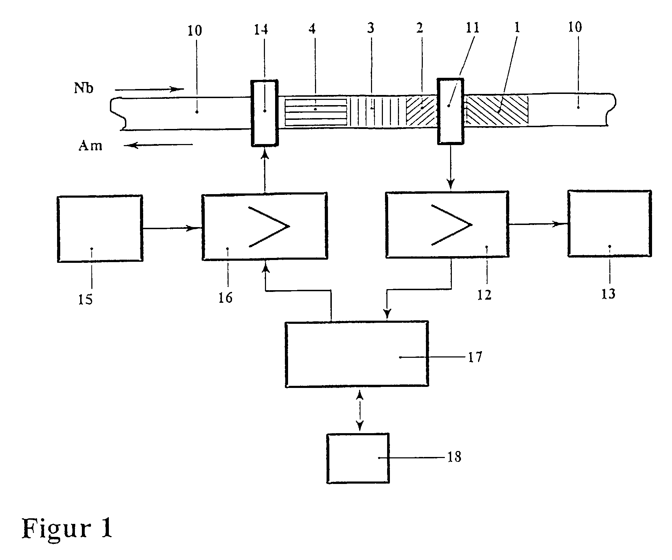

Figur 1 ein bevorzugtes Ausführungsbeispiel.

Bevor auf die Beschreibung der Ausführungsbeispiele näher eingegangen wird, sei darauf hingewiesen, daß die in den Figuren zum besseren Verständnis der Erfindung getrennt dargestellten Stufen auch mit anderen Stufen als integrierte Schaltung, Hybridschaltung oder dergleichen zusammengefaßt sein können. Zumindest einzelne dieser Stufen können auch durch einen Mikrorechner oder durch ein für dessen Steuerung geeignetes Programm realisiert sein.

Mittel, die im folgenden in einer Stufe enthalten sind, können auch getrennt ausgeführt werden.

Figur 1 zeigt ein bevorzugtes Ausführungsbeispiel, das als Teil eines Bandaufzeichnungsgerätes zur digitalen Datenaufzeichnung, beispielsweise für eine Digitale Compact Cassette (DCC), ausgeführt ist. Dabei wurden nur diejenigen Mittel gezeigt, die zur Erläuterung der Erfindung bzw. des Ausführungsbeispiels dienen. Andere Mittel, wie beispielsweise diejenigen zum Bandantrieb, wurden der übersichtlichkeit wegen weggelassen.

Im Normalbetrieb (Nb) wird ein Magnetband 10 von links nach rechts bewegt. Dabei werden Datenpakete 1, ..., 4 von einem Lesekopf 11 ausgelesen und von einem Verstärker 12 verstärkt. Ein erstes von diesem Verstärker 12 verstärktes Signal wird an Mittel geleitet, die durch einen Block 13 angedeutet sind und die die von dem Band 10 ausgelesenen Daten verarbeiten und entsprechende Audio- und/oder Videoinformationen einem Benutzer zur Verfügung stellen.

Die Datenpakete 1, ..., 4 können während desselben oder während irgendeines vorangegangenen Bandlaufes von einem Schreibkopf 14 auf das Band 10 geschrieben worden sein. Der Kopf 14 erhält entsprechende Signale von einer Signalquelle 15, die beispielsweise ein Tuner, eine externe Audio- und/oder Videoquelle oder dergleichen sein kann. Die von der Signalquelle 15 gelieferten Signale werden, falls erforderlich, von einer Aufbereitungsstufe 16 digitalisiert und mit einem vorgegebenem Pegel an den Schreibkopf 14 geleitet.

Die Datenpakete 1, ..., 4 können auch von einem anderen nach ähnlichem Verfahren arbeitenden Aufzeichnungsgerät auf das Band 10 geschrieben worden sein.

Weiterhin ist noch ein Steuergerät 17 vorgesehen, dem ein zweites Signal des Verstärkers 12 zugeführt wird. Das Steuergerät 17 vergleicht einen gemittelten Pegelwert dieses zweiten Signals mit einem vorgegebenem Sollwert. Liegt der Pegelwert unterhalb des Sollwerts, so erzeugt das Steuergerät 17 ein entsprechendes Warnsignal an eine Bedienstufe 18, die dem Benutzer oder weiteren Mitteln akustisch und/oder optisch oder auf sonstige Weise einen entsprechenden Pegelzustand signalisiert. Der Benutzer wird dadurch aufgefordert, über die Stufe 18 einen Auffrisch-Modus einzuleiten oder zumindest zuzulassen.

Nachdem der Benutzer eine entsprechende Eingabe getätigt hat, wird das Band 10 in diesem Ausführungsbeispiel bis zum Ende, das heißt so weit wie möglich nach rechts (Nb) gespult. Anschließend wird das Band zur Durchführung des Auffrisch-Modus in entgegengesetzter Richtung (Am) mit vorgegebener Geschwindigkeit bewegt. Dabei werden die aufgezeichneten Daten zunächst an dem Lesekopf 11 vorbeigeführt und das Steuergerät 17 enthält ein entsprechendes Signal vom Verstärker 12. Das Steuergerät 17 überprüft dieses Signal bezüglich des Pegels und verstärkt es soweit, bis ein vorgegebener Pegel erreicht ist. Mit diesem Pegel werden die Signale an die Stufe 16 gegeben, die den Schreibkopf 14 entsprechend ansteuert. Das Steuergerät 17 kann die von der Stufe 12 empfangenen digitalen Signale auch auf Fehler überprüfen und gegebenenfalls entsprechend korrigieren.

Durch den Auffrisch-Modus erfolgt auf dem Band 10 eine Verschiebung der Datenpakete 1, ... 4, zum Bandende hin und zwar um die Entfernung entsprechend des Abstandes zwischen dem Lesekopf 11 und dem Schreibkopf 14. Das führt, falls das Band 10 bereits bis zum Ende beschrieben war, zu einem entsprechenden Datenverlust. Dieser ist jedoch vergleichsweise gering, da der Abstand zwischen den Köpfen maximal im Bereich von wenigen Zentimetern liegt, während die gesamte Bandlänge üblicherweise einige hundert Meter beträgt. Damit ein Verlust an Daten, was gleichbedeutend mit einem Verlust an Musikgenuß oder dergleichen sein kann, was aber auch ein Verlust von Steuerdaten, beispielsweise für eine Datenverarbeitungsanlage, bedeuten kann, nicht zu unangenehmen Überraschungen führt, wird bei dem beschriebenen Ausführungsbeispiel die Freigabe über die Stufe 18 zwischengeschaltet.

Bei einer anderen Ausführungsform kann durch das Warnsignal eine Überprüfung veranlaßt werden, durch die festgestellt wird, ob das Band 10 bis zum Ende bespielt ist oder ob genügend Platz zur Auffrischung vorhanden ist. Das entsprechende Ergebnis kann dem Benutzer angezeigt werden oder automatisch zum Auffrisch-Modus führen.

Ferner kann das nicht bespielte Bandende dazu benutzt werden, die relative Lage zwischen den beiden Köpfen 11 und 14 zu überprüfen, beispielsweise indem das Steuergerät 17 die Stufe 16 mit vorgegebenen Signalen ansteuert, die zu einer entsprechenden Aufzeichnung führen. Die entsprechenden Testsignale können in Frequenz und/oder Pegel variiert werden. Zusätzlich kann gegebenenfalls auch eine Vormagnetisierung des Bandes 10 korrigiert werden.

Als Testsignale können auch bereits vorhandene Daten 1, ..., 4, verwendet werden, die ausgelesen, aufbereitet und entsprechend dem Band 10 neu eingeprägt werden. Durch Betrieb in Nb-Richtung können diese aufgefrischten Daten anschließend überprüft werden.

Bei einer weiteren Ausgestaltung des beschriebenen Ausführungsbeispiels ist ein Speicher vorgesehen, in dem die von der Stufe 12 an das Steuergerät 17 abgegebenen Signale zwischengespeichert werden. Durch Auslesen und zeitlich richtig gesteuertes Weiterleiten über die Stufe 16 und Einlesen über Schreibkopf 14 können die Datenpakete 1, ..., 4, in ihrer aufgefrischten Form an die gleiche Stelle des Bandes 10 geschrieben werden, wo sie zuvor vorhanden waren. Damit wird ein Verschieben der Datenpakete zum Bandende hin, und damit auch ein Datenverlust, vermieden. In dieser Ausgestaltung kann der Auffrisch-Modus sowohl in der einen Bandrichtung (Nb) als auch in der anderen Bandrichtung (Am) durchgeführt werden.

Bei einem weiteren Ausführungsbeispiel wird ein Bandgerät mit analoger Signalaufzeichnung verwendet. In diesem Fall können analoge Signale durch das Steuergerät 17 aufgefrischt werden. Bevorzugt wird eine Digitalisierung der rückwärts abgespielten Analogsignale zur Zwischenspeicherung. Das anschließende Zurückverwandeln in analoge Signale und das Aufspielen auf das Band 10 in aufgefrischter Form verhindert oder vermindert einen Datenverlust.

Bei einem weiteren Ausführungsbeispiel ist das Aufzeichnungsgerät für Scheiben, wie MOD oder MD geeignet. Auch in diesen Fällen kann ein Datenverlust drohen, beispielsweise durch Strahlungseinflüsse wie z.B. thermische, elektromagnetische oder andere Strahlungen oder Wellen. Der Vergleich mit einem entsprechenden Sollpegel und der gegebenenfalls nachgeschaltete Auffrischungs- und Test-Modus erfolgen ähnlich wie bei dem Ausführungsbeispiel der Figur 1.

## Patentansprüche

1. Verfahren zur Überwachung von aufgezeichneten Daten, wobei diese Daten von einem Datenträger gelesen werden, der Pegel der gelesenen Daten mit einem vorgegebenen Sollwert verglichen wird und dann ein Warnsignal erzeugt wird, wenn der Pegel der gelesenen Daten den Sollwert unterschreitet, dadurch gekennzeichnet, daß das Warnsignal einen Auffrischungs-Modus bewirkt, während dessen die aufgezeichneten Daten gelesen werden, aus den gelesenen Daten bezüglich ihres Pegels angepaßte und vorzugsweise auch bezüglich ihres Informationsgehaltes korrigierte Signale aufbereitet werden, und die aufgefrischten Daten auf denselben Datenträger geschrieben werden.

2. Verfahren nach den Anspruch 1, **dadurch gekennzeichnet,** daß
der Datenträger als Band oder dergleichen ausgebildet ist und daß der Auffrisch-Modus bei einer, im Vergleich zur normalen Band-Abspielrichtung (Nb), entgegengesetzten Band-Abspielrichtung (Am) durchgeführt wird.

3. Verfahren nach einem der Ansprüche 1 bis 2, **dadurch gekennzeichnet**, daß
- mindestens ein weiterer Schreibkopf in der Nähe des Lesekopfes (11) sowie mindestens ein weiterer Lesekopf in der Nähe des Schreibkopfes (14) vorgesehen ist und daß
- die Schreib- und Leseköpfe derart umgeschaltet werden können, daß die normale Band-Abspielrichtung (Nb) während des Auffrisch-Modus beibehalten werden kann.

4. Verfahren nach einem der Ansprüche 1 bis 3, **dadurch gekennzeichnet**, daß
zwei kombinierte Schreib-/Leseköpfe, beispielsweise mechanisch und/oder elektronisch, vertauscht werden können, um die normale Band-Abspielrichtung (Nb) während des Auffrisch-Modus beibehalten zu können.

5. Verfahren nach einem der Ansprüche 1 bis 4, **dadurch gekennzeichnet,** daß
ein teilweiser Datenverlust am Bandende oder -anfang durch Speicherung der ausgelesenen Daten und durch zeitlich richtiges Einlesen der aufgefrischten Daten auf das Band (10) vermieden werden kann.

6. Vorrichtung zur Überwachung von aufgezeichneten Daten (1,...,4), wobei diese Daten von einem Datenträger (10) mittels eines Lesekopfes (11) gelesen werden, und wobei Steuermittel (17) vorgesehen sind, die den Pegel der gelesenen Daten mit einem vorgegebenen Sollwert vergleichen und ein Warnsignal erzeugen, sobald der Pegel der gelesenen Daten den Sollwert unterschreitet, dadurch gekennzeichnet, daß
- die Steuermittel (17) bei Vorliegen des Warnsignales einen Auffrisch-Modus bewirken, bei dem die aufgezeichneten Daten (1,...,4) durch Lesemittel (11) gelesen werden, aus den gelesenen Daten bezüglich ihres Pegels angepaßte und vorzugsweise auch bezüglich ihres Informationsgehaltes korrigierte Signale durch Aufbereitungsmittel (12, 17) aufbereitet werden und daß
- die aufgefrischten Daten mittels Mittel zum Schreiben (14) auf denselben Datenträger (10) geschrieben werden.

7. Vorrichtung nach dem Anspruche 6, **dadurch gekennzeichnet,** daß
- der Datenträger als Band (10) oder dergleichen ausgebildet ist und daß
- die Steuermittel (17) Antriebsmittel derart ansteuern, daß der Auffrisch-Modus bei einer, im Vergleich zur normalen Band-Abspielrichtung, entgegengesetzten Band-Abspielrichtung durchgeführt wird.

8. Vorrichtung nach einem der Ansprüche 6 und 7, **dadurch gekennzeichnet**, daß
- mindestens ein weiterer Schreibkopf in der Nähe des Lesekopfes (11) sowie mindestens ein weiterer Lesekopf in der Nähe des Schreibkopfes (14) vorgesehen ist und daß
- eine Umschalteinrichtung die Schreib- und Leseköpfe derart schaltet, daß die normale Band-Abspielrichtung (Nb) während des Auffrischmodus beibehalten werden kann.

## Claims

1. Process for the supervision of recorded data in which these data are read out from a storage medium, the level of read out data is confronted with a set value and then a warning signal sets off when the level of read out data lies below the set value, characterised in that the warning signal sets off a refresh mode during which the recorded data are read out, their levels are adapted, and preferably their corrected signals are processed also, and the refreshed data are written on the same storage medium.

2. Process according to claim 1, characterised in that the storage medium is formed as a tape or similarly, and that the refresh mode, compared to the tape's normal functioning direction (Nb), is carried out in the opposite direction to the tape's normal functioning (Am).

3. Process according to one of claims 1 to 2, characterised in that
- at least one further writing head is provided next to the reading head (11) as well as at least one further reading head beside the writing head (14) and in that
- the writing and reading heads can be permuted in such a way that the normal recording direction of the tape (Nb) can be maintained during the refresh mode.

4. Process according to one of claims 1 to 3, characterised in that two combined reading/writing heads, for example in a mechanical and/or electronic way, can be exchanged to be able to maintain the normal recording direction of the tape (Nb) during the refresh mode.

5. Process according to one of claims 1 to 4, characterised in that a partial data loss at the end or at the beginning of the tape can be avoided by means of the memorisation of the selected data and by the correct reading of the refreshed data of the tape (10).

6. Device for supervislon of the recorded data (1,...,4), in which these data are read out from a storage medium (10) by a reading head (11), and in which a receiver is provided (17) that compares the level of read out data with a set value and that generates a warning signal when the level of read out data lies below the set value, characterised in that
- if the warning signal takes place, the receiver (17) produces a refresh mode, in which the recorded data (1,...,4) are read out by reading means (11), the corrected signals are processed according to the read out data regarding their adjusted level, and preferably to their data contents also, using processing means (12, 17), and in that
- the refreshed data are written using writing means (14) on the same storage medium (10).

7. Device according to claim 6, characterised in that
- the storage medium is formed as a tape (10) or similarly, and in that
- the receiver (17) and the impulse means work in such a way that the refresh mode is carried out in the opposite direction to that of the recording of the tape, compared with the normal recording direction of the tape.

8. Device according to one of claims 6 or 7, characterised in that
- at least one further writing head is provided beside the reading head (11) as well as at least one further reading head beside the writing head (14) and in that
- a commutation device commutes the writing and reading heads in such a way that the normal functioning direction of the tape (Nb) can be maintained during the refresh mode.

## Revendications

1. Procédé pour la supervision des données enregistrées dans lequel ces données sont lues d'un support de données, le niveau des données lues est confronté avec une valeur prescrite prédéterminée et ensuite un signal d'avertissement se déclenche quand le niveau des données lues dépasse vers le bas la valeur prescrite, caractérisée en ce que le signal d'avertissement déclenche un mode de rafraîchissement pendant lequel les données enregistrées sont lues, leurs niveaux adaptés et préférablement aussi leurs signaux corrigés sont traités, et les données rafraîchies sont écrites sur les mêmes supports de données.

2. Procédé selon le revendication 1, caractérisé en ce que le support de données est formé comme une bande ou similaire et que le mode de rafraîchissement, par rapport à la direction normale de fonctionnement de bande (Nb), est effectué en direction opposée au fonctionnement normal de la bande (Am).

3. Procédé selon une des revendications de 1 à 2, caractérisé en ce que
- il est prévu au moins une tête d'écriture ultérieure à côté de la tête de lecture (11) ainsi qu'au moins une tête de lecture ultérieure à côté de la tête d'écriture (14) et en ce que
- les têtes d'écriture et de lecture peuvent être permutées d'une telle façon que la direction normal d'enregistrement de la bande (Nb) peut être maintenue pendant le mode de rafraîchissement.

4. Procédé selon une des revendications de 1 à 3, caractérisé en ce que deux têtes de lecture/écriture combinées, par exemple de façon mécanique et/ou de façon électronique, peuvent être échangées pour pouvoir maintenir la direction normale d'enregistrement de la bande (Nb) pendant le mode de rafraîchissement.

5. Procédé selon une des revendications de 1 à 4, caractérisé en ce qu'une perte partielle de données à la fin ou au début de la bande peut être évitée parmi la mémorisation des données sélectionnées et à travers la correcte lecture des données rafraîchies de la bande (10).

6. Dispositif pour la supervision des données (1,...,4) enregistrées, dans lequel ces données sont lues d'un support de données (10) parmi une tête de lecture (11), et dans lequel il est prévu un récepteur (17) qui compare le niveau des données lues avec une valeur prescrite prédéterminée et génère un signal d'avertissement dès que le niveau des données lues dépasse vers le bas la valeur prescrite, caractérisée en ce que
- si le signal d'avertissement a lieu, le récepteur (17) provoque un mode de rafraîchissement, dans lequel les données enregistrées (1,...,4) sont lues par des moyens de lecture (11), les signaux corrigés sont traités d'après les données lues quant à leur niveau ajusté et préférablement aussi quant à leur contenu d'informations en utilisant des moyens de traitement (12, 17), et en ce que
- les données rafraîchies sont écrites en utilisant des moyens pour écrire (14) sur les mêmes supports de données (10).

7. Dispositif selon le revendication 6, caractérisé en ce que
- le support de données est formé comme bande (10) ou similaire et en ce que
- le récepteur ( 17) et le moyen d'impulsion commandent d'une telle sorte que le mode de rafraîchissement est effectué avec une direction contraire d'enregistrement de la bande, par rapport à la direction normale d'enregistrement de la bande.

8. Dispositif selon une des revendications 6 ou 7, caractérisé en ce que
- il est prévu au moins une tête d'écriture ultérieure à côté de la tête de lecture (11) ainsi qu'au moins une tête de lecture ultérieure à côté de la tête d'écriture (14) et en ce que
- un dispositif de commutation commute les têtes d'écriture et de lecture d'une telle sorte que la direction de fonctionnement normal de la bande (Nb) peut être maintenue pendant le mode de rafraîchissement.
